# EUROPEAN PATENT APPLICATION

(11) **EP 4 597 227 A1**
(43) Date of publication of application: **06.08.2025**
(21) Application number: 25155671.8
(22) Date of filing: 03.02.2025
(51) Int. Cl.: G03G 15/04, G02B 26/12, G03G 15/043

(54) **LASER SCANNING DEVICE AND IMAGE FORMING APPARATUS**

(30) Priority: 05.02.2024 JP 2024015456
(71) Applicant: KYOCERA Document Solutions Inc., Osaka-shi, Osaka, 540-8585 (JP)
(72) Inventor: Ouchi, Kei, Osaka-shi, 540-8585 (JP)
(74) Representative: Plougmann Vingtoft a/s

(57) **Abstract**

An aperture unit (530) includes a plurality of apertures (53) which respectively cause a plurality of beam light sets that have passed through a plurality of lenses (52) to pass therethrough. A laser scanner (54) reflects and scans the plurality of beam light sets that have passed through the plurality of apertures (53). A support mechanism (58) supports the aperture unit (530) and is capable of changing a position of the aperture unit (530) in a light traveling direction that is directed from the plurality of lenses (52) toward the laser scanner (54) and an angle of the aperture unit (530) with respect to the light traveling direction.

## Description

### INCORPORATION BY REFERENCE

This application is based upon and claims the benefit of priority from the corresponding Japanese Patent Application No. 2024-015456 filed on February 5, 2024, the entire contents of which are incorporated herein by reference.

### BACKGROUND

The present disclosure relates to a laser scanning device including a multibeam light source and an image forming apparatus.

An image forming apparatus that uses electrophotography includes a laser scanning device which forms an electrostatic latent image on a surface of a photoconductor. The laser scanning device includes a laser scanner such as a polygon mirror and other optical devices.

The laser scanning device may include a multibeam light source that emits a beam light set constituted of a plurality of light beams and an aperture which causes the beam light set to pass therethrough. The aperture is arranged between the multibeam light source and the laser scanner.

For example, it is known that the aperture is arranged on a single substrate together with the laser scanner.

### SUMMARY

A laser scanning device according to an aspect of the present disclosure includes a plurality of multibeam light sources, a plurality of lenses, an aperture unit, a laser scanner, and a support mechanism. The plurality of multibeam light sources respectively emit a plurality of beam light sets each constituted of a plurality of light beams. The plurality of lenses respectively cause the plurality of beam light sets to pass therethrough. The aperture unit includes a plurality of apertures which respectively cause the plurality of beam light sets that have passed through the plurality of lenses to pass therethrough. The laser scanner reflects and scans the plurality of beam light sets that have passed through the plurality of apertures. The support mechanism supports the aperture unit and is capable of changing a position of the aperture unit in a light traveling direction that is directed from the plurality of lenses toward the laser scanner and an angle of the aperture unit with respect to the light traveling direction.

An image forming apparatus according to another aspect of the present disclosure includes a plurality of photoconductors, the laser scanning device, a plurality of developing devices, and a transfer device. The laser scanning device forms electrostatic latent images on surfaces of the plurality of photoconductors by scanning the plurality of beam light sets on the surfaces of the plurality of photoconductors. The plurality of developing devices develop the electrostatic latent images formed on the surfaces of the plurality of photoconductors into toner images. The transfer device transfers the toner images formed on the surfaces of the plurality of photoconductors onto a sheet.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a configuration diagram of an image forming apparatus including a laser scanning device according to an embodiment;
Fig. 2 is a configuration diagram of the laser scanning device according to the embodiment;
Fig. 3 is an internal perspective view of the laser scanning device according to the embodiment;
Fig. 4 is a perspective view of a plurality of multibeam light sources and a plurality of lenses in a laser scanning device according to the embodiment;
Fig. 5 is a front view of an aperture unit in the laser scanning device according to the embodiment;
Fig. 6 is a diagram showing configurations of a plurality of devices arranged on an optical path to a laser scanner in the laser scanning device according to the embodiment;
Fig. 7 is a diagram showing a first adjustment state of a support mechanism in the laser scanning device according to the embodiment; and
Fig. 8 is a diagram showing a second adjustment state of the support mechanism in the laser scanning device according to the embodiment.

### DETAILED DESCRIPTION

Hereinafter, an embodiment of the present disclosure will be described with reference to the drawings. It is noted that the following embodiment is an example of embodying the present disclosure and does not limit the technical scope of the present disclosure.

An image forming apparatus 10 according to the embodiment executes print processing using electrophotography. The print processing is processing of forming an image on a sheet 9. The sheet 9 is an image forming medium such as a paper sheet or a sheet-type resin member.

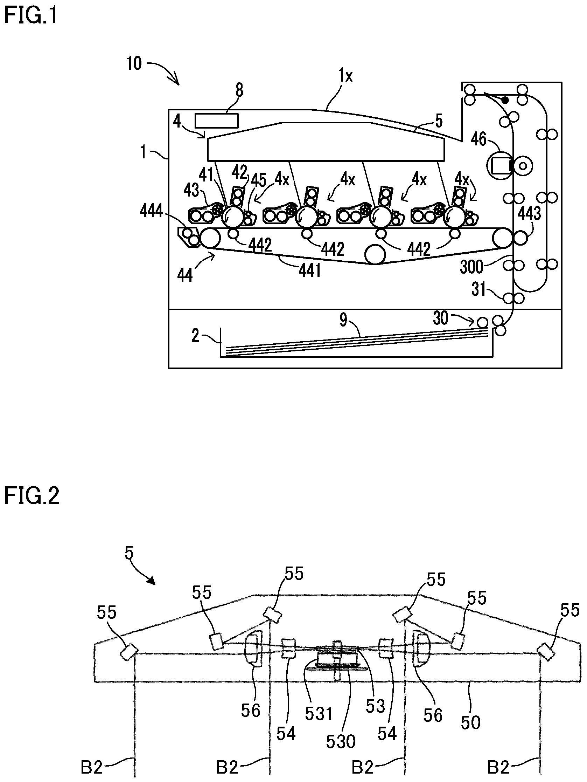

The image forming apparatus 10 shown in Fig. 1 is a printer. The image forming apparatus 10 may alternatively be a copying machine, a facsimile apparatus, a multifunction peripheral, or the like.

### [Configuration of image forming apparatus 10]

As shown in Fig. 1, the image forming apparatus 10 includes a main housing 1 and a sheet conveying device 3, a printing device 4, and a control device 8 accommodated in the main housing 1.

The sheet conveying device 3 includes a sheet feed mechanism 30 and a plurality of conveying roller pairs 31. The sheet feed mechanism 30 feeds the sheets 9 stored in a sheet storing portion 2 to a conveying path 300. The conveying path 300 is a path for conveying the sheet 9.

The plurality of conveying roller pairs 31 rotate to convey the sheet 9 along the conveying path 300. In addition, the plurality of conveying roller pairs 31 discharge the sheet 9 on which an image has been formed on the conveying path 300 onto a discharge tray 1x.

The image forming apparatus 10 includes a tandem-type printing device 4. The printing device 4 includes a laser scanning device 5, a plurality of image forming portions 4x, a transfer device 44, and a fixing device 46. The plurality of image forming portions 4x respectively correspond to a plurality of development colors.

Each of the image forming portions 4x includes a drum-type photoconductor 41, a charging device 42, a developing device 43, a drum cleaning device 45, and the like. In other words, the printing device 4 includes a plurality of photoconductors 41, a plurality of developing devices 43, and a plurality of drum cleaning devices 45 respectively corresponding to the plurality of development colors.

Each of the photoconductors 41 rotates so that each of the charging devices 42 charges a surface of the photoconductor 41. The laser scanning device 5 scans a plurality of light beams onto the charged surfaces of the plurality of photoconductors 41. Thus, the laser scanning device 5 forms an electrostatic latent image on the surface of each of the photoconductors 41.

The plurality of developing devices 43 respectively supply toner to the surfaces of the plurality of photoconductors 41 to thus develop the electrostatic latent images into toner images. The toner is granular developer. The photoconductor 41 is an example of an image-carrying member which rotates while carrying the toner image.

In the present embodiment, the printing device 4 includes four image forming portions 4x respectively corresponding to the toner of the four development colors of yellow, cyan, magenta, and black. Accordingly, the printing device 4 includes four photoconductors 41, four developing devices 43, and four drum cleaning devices 45.

Four toner images are respectively formed on the surfaces of the four photoconductors 41. The transfer device 44 transfers the toner images formed on the surfaces of the four photoconductors 41 onto the sheet 9.

The transfer device 44 includes an intermediate transfer belt 441, four primary transfer devices 442 respectively corresponding to the four image forming portions 4x, a secondary transfer device 443, and a belt cleaning device 444.

The four primary transfer devices 442 respectively transfer the toner images formed on the surfaces of the four photoconductors 41 onto a surface of the intermediate transfer belt 441. Thus, a color toner image obtained by combining the toner images of the four photoconductors 41 is formed on the surface of the intermediate transfer belt 441.

The secondary transfer device 443 transfers the color toner image formed on the intermediate transfer belt 441 onto the sheet 9 at a transfer position on the conveying path 300.

The fixing device 46 heats and pressurizes the color toner image transferred onto the sheet 9. Thus, the fixing device 46 fixes the color toner image onto the sheet 9.

The drum cleaning devices 45 respectively remove waste toner remaining on the surfaces of the photoconductors 41. The belt cleaning device 444 removes the waste toner remaining on the intermediate transfer belt 441.

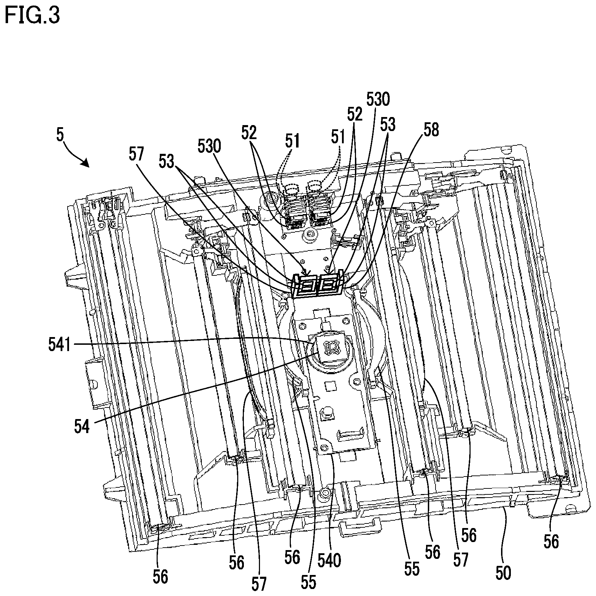

As shown in Fig. 2 and Fig. 3, the laser scanning device 5 includes a unit housing 50 and a plurality of optical devices accommodated in the unit housing 50. The unit housing 50 is a molded member formed of a synthetic resin.

The plurality of optical devices include a plurality of light sources 51, a plurality of first lenses 52, a plurality of apertures 53, a laser scanner 54, one or more second lenses 55, a plurality of mirrors 56, and one or more third lenses 57.

In the present embodiment, the laser scanner 54 is a polygon mirror. The polygon mirror includes a plurality of mirrors arranged in a regular polygon shape in a circumferential direction. The polygon mirror rotates by being driven by a polygon motor 541 (see Fig. 2).

It is noted that a galvanometer mirror or a MEMS mirror (Micro Electro Mechanical Systems mirror) may alternatively be adopted as the laser scanner 54.

The laser scanning device 5 further includes an electronic substrate 540 on which a circuit that drives the polygon motor 541 is mounted. In other words, a circuit that drives the laser scanner 54 is mounted on the electronic substrate 540.

The plurality of light sources 51 respectively emit a plurality of beam light sets B2 each constituted of a plurality of light beams B1 (see Fig. 2, Fig. 4, and Fig. 6). In other words, the plurality of light sources 51 are a plurality of multibeam light sources that respectively emit the plurality of beam light sets B2.

For example, each of the light sources 51 is a multibeam laser diode that emits the beam light set B2 including a plurality of laser light beams.

In the present embodiment, the laser scanning device 5 scans the four beam light sets B2 on the respective surfaces of the four photoconductors 41, to thus form the electrostatic latent images on the respective surfaces of the four photoconductors 41.

The plurality of first lenses 52 respectively cause the plurality of beam light sets B2 to pass therethrough. Each of the first lenses 52 is a cylindrical lens.

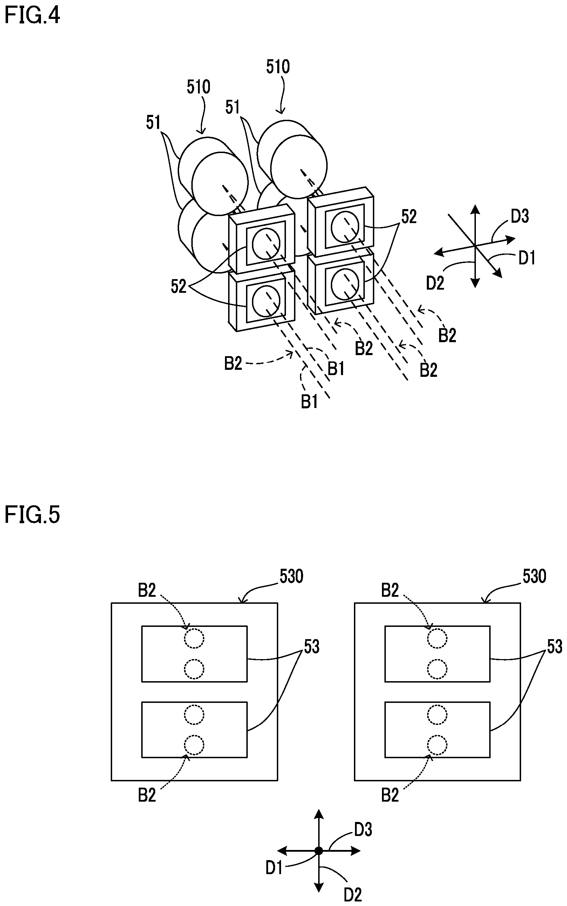

The plurality of apertures 53 respectively cause the plurality of beam light sets B2 that have passed through the plurality of first lenses 52 to pass therethrough (see Fig. 5). The laser scanner 54 reflects and scans the plurality of beam light sets B2 that have passed through the plurality of apertures 53.

The one or more second lenses 55 and the one or more third lenses 57 cause the plurality of beam light sets B2 to be scanned by the laser scanner 54 to pass therethrough. Each of the second lenses 55 and the third lenses 57 is an fθ lens. In the present embodiment, the laser scanning device 5 includes two second lenses 55 and two third lenses 57 that cause two beam light sets B2 to pass therethrough.

The plurality of mirrors 56 reflect the plurality of beam light sets B2 that have passed through the second lenses 55 and the third lenses 57 toward the corresponding surfaces of the plurality of photoconductors 41. Thus, the plurality of beam light sets B2 are scanned on the surfaces of the plurality of photoconductors 41.

In the present embodiment, the laser scanning device 5 includes four light sources 51 respectively corresponding to the four development colors. Each of the light sources 51 emits the beam light set B2 constituted of two light beams B1. Accordingly, the laser scanning device 5 scans the four beam light sets B2 each constituted of two light beams B1 on the surfaces of the four photoconductors 41.

The control device 8 controls the sheet conveying device 3 and the printing device 4. For example, the control device 8 controls the plurality of light sources 51 and the polygon motor 541 in the laser scanning device 5, to control formation of the electrostatic latent images on the surfaces of the plurality of photoconductors 41.

Incidentally, in the laser scanning device 5, a position of each of the apertures 53 needs to be adjusted. Since the image forming apparatus 10 is a tandem-type color image forming apparatus, the laser scanning device 5 includes the plurality of light sources 51 that each emit the beam light set B2 and the plurality of apertures 53 (see Fig. 4).

In the laser scanning device 5, a configuration that enables the plurality of apertures 53 respectively corresponding to the plurality of light sources 51 to be adjusted by a mechanism that is made as simple as possible is being desired.

The laser scanning device 5 includes one or more aperture units 530 and a support mechanism 58 which supports the aperture unit 530 for adjusting the position of each of the plurality of apertures 53 (see Fig. 3, Fig. 5, and Fig. 6).

In the examples shown in Fig. 3 and Fig. 5, the laser scanning device 5 includes two aperture units 530 each corresponding to two beam light sets B2. Each of the aperture units 530 includes two apertures 53 (see Fig. 5). The support mechanism 58 supports each of the aperture units 530.

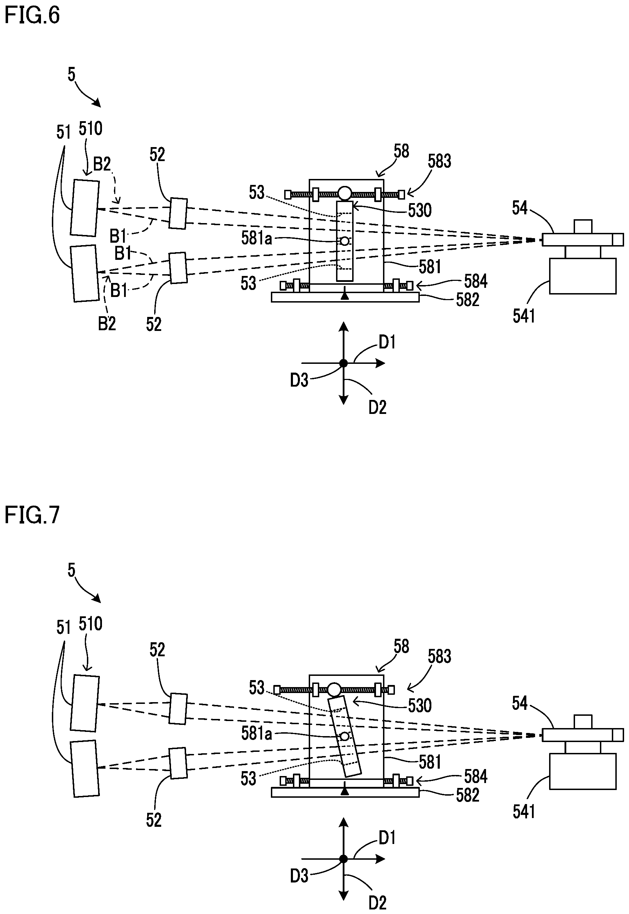

Herein, a direction that is directed from the plurality of first lenses 52 toward the laser scanner 54 will be referred to as a light traveling direction D1. The four light sources 51 include two light source sets 510 (see Fig. 4). Each of the light source sets 510 includes two light sources 51 arrayed in an array direction D2 that intersects with the light traveling direction D1. In the present embodiment, the array direction D2 is an up-down direction (see Fig. 4 and Fig. 6).

Each of the aperture units 530 includes two apertures 53 that respectively cause the two beam light sets B2 emitted from each of the light source sets 510 to pass therethrough (see Fig. 5).

The support mechanism 58 is capable of changing the position of each of the aperture units 530 in the light traveling direction D1 and an angle of each of the aperture units 530 with respect to the light traveling direction D1.

The support mechanism 58 includes a rotation support mechanism 581, a slide support mechanism 582, an angle fixing mechanism 583, and a position fixing mechanism 584.

The rotation support mechanism 581 supports each of the aperture units 530 such that the aperture units 530 are rotatable about a support shaft 581a arranged along an axial direction D3 (see Fig. 6). The axial direction D3 is a direction that intersects with the light traveling direction D1 and the array direction D2.

The slide support mechanism 582 supports the rotation support mechanism 581 such that the rotation support mechanism 581 is movable along the light traveling direction D1.

The angle fixing mechanism 583 fixes each of the aperture units 530 at an arbitrary angle within a rotatable range. The position fixing mechanism 584 fixes the rotation support mechanism 581 at an arbitrary position within a movable range in the light traveling direction D1.

Fig. 6 shows a reference state of the support mechanism 58. The reference state is a state where one of the aperture units 530 is fixed at a reference angle and the rotation support mechanism 581 is fixed at a reference position in the light traveling direction D1.

Fig. 7 shows a first adjustment state of the support mechanism 58. The first adjustment state is a state where one of the aperture units 530 is fixed at an angle different from the reference angle and the rotation support mechanism 581 is fixed at the reference position.

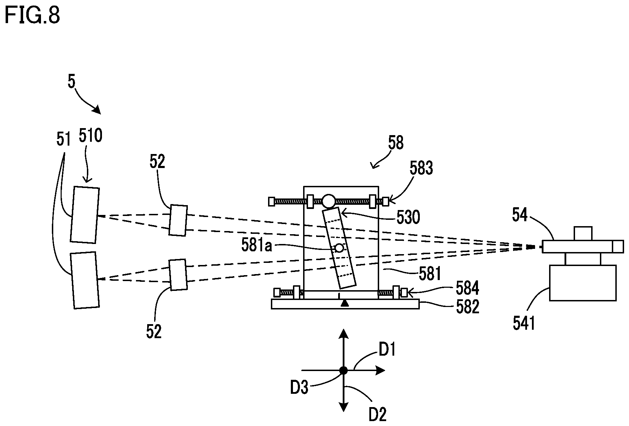

Fig. 8 shows a second adjustment state of the support mechanism 58. The second adjustment state is a state where one of the aperture units 530 is fixed at an angle different from the reference angle and the rotation support mechanism 581 is fixed at a position different from the reference position.

In the laser scanning device 5, the plurality of beam light sets B2 can be adjusted by adjusting one aperture unit 530. In the present embodiment, two beam light sets B2 can be adjusted by adjusting one aperture unit 530.

By adopting the laser scanning device 5, the plurality of apertures 53 respectively corresponding to the plurality of light sources 51 can be adjusted by a simple mechanism.

It is noted that each of the light sources 51 may alternatively be a multibeam light source that emits the beam light set B2 including three or more light beams B1.

### [Notes of disclosure]

Hereinafter, a general outline of the disclosure extracted from the embodiment described above will be noted. It is noted that the respective configurations and processing functions described in the notes below can be sorted and arbitrarily combined as appropriate.

### <Note 1>

A laser scanning device, including:
a plurality of multibeam light sources which respectively emit a plurality of beam light sets each constituted of a plurality of light beams;
a plurality of lenses which respectively cause the plurality of beam light sets to pass therethrough;
an aperture unit including a plurality of apertures which respectively cause the plurality of beam light sets that have passed through the plurality of lenses to pass therethrough;
a laser scanner which reflects and scans the plurality of beam light sets that have passed through the plurality of apertures; and
a support mechanism which supports the aperture unit and is capable of changing a position of the aperture unit in a light traveling direction that is directed from the plurality of lenses toward the laser scanner and an angle of the aperture unit with respect to the light traveling direction.

### <Note 2>

An image forming apparatus, including:
a plurality of photoconductors;
the laser scanning device according to note 1 which forms electrostatic latent images on surfaces of the plurality of photoconductors by scanning a plurality of beam light sets each constituted of a plurality of light beams on the surfaces of the plurality of photoconductors;
a plurality of developing devices which develop the electrostatic latent images formed on the surfaces of the plurality of photoconductors into toner images; and
a transfer device which transfers the toner images formed on the surfaces of the plurality of photoconductors onto a sheet.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A laser scanning device (5), comprising:
a plurality of multibeam light sources (51) which respectively emit a plurality of beam light sets each constituted of a plurality of light beams;
a plurality of lenses (52) which respectively cause the plurality of beam light sets to pass therethrough;
an aperture unit (530) including a plurality of apertures (53) which respectively cause the plurality of beam light sets that have passed through the plurality of lenses (52) to pass therethrough;
a laser scanner (54) which reflects and scans the plurality of beam light sets that have passed through the plurality of apertures (53); and
a support mechanism (58) which supports the aperture unit (530) and is capable of changing a position of the aperture unit (530) in a light traveling direction that is directed from the plurality of lenses (52) toward the laser scanner (54) and an angle of the aperture unit (530) with respect to the light traveling direction.

2. An image forming apparatus (10), comprising:
a plurality of photoconductors (41);
the laser scanning device (5) according to claim 1 which forms electrostatic latent images on surfaces of the plurality of photoconductors (41) by scanning a plurality of beam light sets each constituted of a plurality of light beams on the surfaces of the plurality of photoconductors (41);
a plurality of developing devices (43) which develop the electrostatic latent images formed on the surfaces of the plurality of photoconductors (41) into toner images; and
a transfer device (44) which transfers the toner images formed on the surfaces of the plurality of photoconductors (41) onto a sheet.
